Europäisches Patentamt

European Patent Office

Office européen des brevets

(11) Numéro de publication: **0 369 909**
**A1**

# (12) DEMANDE DE BREVET EUROPEEN

(21) Numéro de dépôt: **89430030.0**

(22) Date de dépôt: **10.11.89**

(51) Int. Cl.5: **G05B 19/41, B23D 59/00, B44B 1/00**

(30) Priorité: **15.11.88 FR 8815191**

(43) Date de publication de la demande:
**23.05.90 Bulletin 90/21**

(84) Etats contractants désignés:
**AT BE CH DE ES FR GB GR IT LI LU NL SE**

(71) Demandeur: **Musset, Claude Paul**
**Quartier des Neigles Carrefour RN 8**
**F-13240 Gemenos(FR)**

Demandeur: **Mambre, Benoit Aimé**
**23 rue des Lilas**
**F-25000 Besançon(FR)**

Demandeur: **Palissot, François Raymond**
**L'hôpital du Gros Bois**
**F-25660 Saône(FR)**

(72) Inventeur: **Musset, Claude Paul**
**Quartier des Neigles Carrefour RN 8**
**F-13240 Gemenos(FR)**
Inventeur: **Mambre, Benoit Aimé**
**23 rue des Lilas**
**F-25000 Besançon(FR)**
Inventeur: **Palissot, François Raymond**
**L'hôpital du Gros Bois**
**F-25660 Saône(FR)**

(74) Mandataire: **Moretti, René et al**
**c/o Cabinet BEAU DE LOMENIE**
**"Prado-Mermoz" 232, Avenue du Prado**
**F-13008 Marseille(FR)**

(54) **Procédé de fabrication de maquette et dispositif de découpe automatique d'éléments pour cette fabrication.**

(57) La présente invention a pour objet un procédé de fabrication de maquettes et un dispositif de découpe automatique d'éléments pour cette fabrication.

Un ordinateur (1) reçoit toutes les données codées suivant une norme internationale de la description géométrique des volumes et des surfaces d'un projet dont on veut réaliser la maquette. Ledit ordinateur commande une machine à outils (15) dont la tête de fraisage (16) porte des outils interchangeables (28), de telle façon qu'elle découpe des éléments correspondant à l'échelle voulue auxdites surfaces dans des plaques (22) de différente épaisseur et de divers matériaux. On repère chaque élément sur un plan de montage (21) et on contrôle la découpe grâce à des capteurs de déplacement solidaires des moteurs (23) de translation de ladite tête suivant au moins trois axes.

Fig. 1

## Procédé de fabrication de maquettes et dispositif de découpe automatique d'éléments pour cette fabrication.

La présente invention a pour objet un procédé de fabrication de maquettes et un dispositif de découpe automatique d'éléments pour cette fabrication.

Le secteur technique de l'invention est la fabrication de machine automatique pouvant découper des matériaux en plaques.

On connaît différents procédés de construction de maquettes, notamment destinés à la réalisation de projets de bâtiments, de plans d'urbanisme, de reconstitution de sites historiques, de relevés topographiques etc....

Il s'avère en effet, que les vues et les perspectives, aussi nombreuses soient-elles, ne suffisent pas pour représenter parfaitement la réalité. Aussi, la plupart des maîtres d'oeuvre ou d'ouvrage d'un projet d'aménagement de construction ou de reconstitution font appel à des spécialistes pour fabriquer des maquettes à échelle réduite dudit projet, à partir de tracés de plans sous forme papier.

La découpe des éléments, leur assemblage et la décoration (habillage) sont, en général réalisés manuellement, à partir de supports en bois ou en plâtre, décorés après montage ce qui entraîne malheureusement un prix de revient fort élevé, parfois dissuasif. De plus, la précision est intimement liée à la qualité, aux compétences de l'artisan réalisateur ainsi qu'aux performances des outils employés. Enfin, cette réalisation est longue et demande beaucoup de minutie. Cette méthode artisanale exclut souvent toute évolution du produit.

Différents brevets ont ainsi été déposés sur des dispositifs et des procédés pour tenter de simplifier les réalisations de maquettes afin de rendre celles-ci plus accessibles et conformes à la demande des clients de plus en plus nombreux.

On peut noter par exemple le brevet NO. 2.130.859 déposé le 23 Mars 1971 par Monsieur ROLLAND R. sur un "dispositif de construction de modèles réduits de bâtiment par assemblage mécanique d'éléments pour la réalisation de jouets pédagogiques et de maquettes". Il s'agit en fait d'éléments préfabriqués prédécoupés constitués de poutres et de panneaux emboîtables.

Le brevet NO. 2.253.444 déposé le 30 Novembre 1973 par ART ET TECHNIQUES APPLIQUES sur un "Procédé de fabrication de maquettes", décrit une simple méthode de découpage de feuilles de couleur collées sur un support rigide pour représenter, notamment, des plans d'urbanisme.

Le Certificat d'Utilité NO. 2.298.351 déposé le 22 Janvier 1975 par Monsieur GUIGOU-FERNANDEZ porte essentiellement sur des éléments préfabriqués de construction des maquettes de paysage.

Enfin, on notera le brevet P. 25 03 342.5 déposé le 28 Janvier 1975 en ALLEMAGNE par la société GEBR-FALLER GmBH FABRIK FUER QUALITAETSSPIELWAREN sur un "ensemble d'éléments de construction de maquettes de bâtiments et procédé pour la fabrication", qui décrit en fait des assemblages à base de carton microondulé, imprimés, prédécoupés, pliables et collés.

Toutes ces méthodes ou éléments de fabrication de maquettes demandent de toutes façons un tracé préalable manuel pour déterminer les contours desdits éléments avant leur découpage dans un matériau donné, quelle que soit la nature de celui-ci. On exclue l'usage d'éléments préfabriqués, car il n'est pas possible avec eux de reconstituer exactement la géométrie voulue.

Pour faciliter la découpe des éléments, les maquettistes peuvent utiliser diverses machines d'usinage connu tel que :
- celles à faisceau laser, mais celui-ci brûle certains matériaux et coûte très cher:
- celles à jet d'eau très efficace, mais comme le laser elles sont chères et transpercent les matériaux et ne permettent donc pas d'usinage à mi-épaisseur;
- celles à fil chauffant utilisables dans les matériaux fondants, mais avec délicatesse, et inutilisables dans le bois et le carton;
- celles par sciage convenant à tous les matériaux, mais rendant impossible la découpe par exemple de baie dans un mur qui la contient;
- celles par fraise conventionnelle qui permet en fait le plus de possibilité, bien qu'il faille prendre certaines précautions comme par exemple au niveau du choix des outils suivant le matériau à usiner.

De nombreux fabricants proposent ainsi des machines suivant un des types ci-dessus, mais en général adaptées à un seul type de matériaux à découper. On peut citer par exemple la société SAINT GOBAIN qui a déposé le 21 Juillet 1977 la demande de brevet NO. 77/22.349, sur une "découpe automatique du verre", la demande de brevet NO. 85/15.143 déposée le 11 Octobre 1985 par Monsieur G. OLIVIER et C. PERREY sur un "procédé de fabrication de maquettes de formes complexes, notamment en mousse" , utilisant un fil chauffant; et la demande de brevet NO.82/13.582, déposée le 28 Juillet 1982 par Monsieur D. BASSO et A. PIETRIKA sur un "procédé et dispositif pour la découpe automatique d'une pièce de bois" utilisant une scie circulaire pour des découpes droites. Il existe également de nombreuses machines pour la découpe de tissus ou la gravure de pièces, chacune ayant alors sa spécificité non utilisable directement en maquette.

On connaît aussi des machines à usiner de type fraiseuse qui sont utilisées dans l'industrie mécanique, mais qui sont très lourdes, chères, puissantes et encombrantes et donc peu adaptées aux besoins des découpes d'éléments pour maquettes.

Quelques petites fraiseuses existent cependant telles que celles des sociétés "CHARLY ROBOT", "SORMEL" "FOLEX" ou encore "ROLAND DG CORPORATION", qui proposent dans certaines configurations de coupler leur machine à la sortie d'un micro-ordinateur.

Ces derniers systèmes sont réservés en général à l'utilisation en laboratoire sans application industrielle. Ils permettent l'usinage de pièces volumiques et unitaires en fabrication, dans la masse d'un matériau précis et sans possibilité de traçage automatique d'un éventuel habillage.

Le procédé utilisé habituellement se réfère à une visualisation en trois dimensions d'une pièce réalisée en micro-ordinateur à partir d'un logiciel DAO/CAO/FAO, destiné au monde de l'industrie mécanique et n'utilisant pas la norme IGES (initial Graphics Exchange Spécification).

En conséquence, ces systèmes se comportent comme des périphériques d'ordinateur de type "traceur", donc sans intelligence propre. Aucun de ces systèmes n'est en mesure de générer des volumes creux et fermés. Aucun ne peut accepter des éléments de variantes autrement qu'en régénérant une nouvelle pièce complète. Aucun ne gère l'optimisation de découpe des pièces en fonction de la nature des matériaux à usiner ainsi que leur chargement automatique sur la machine. Peu de contrôle lors de l'usinage sont effectués afin de vérifier l'adéquation et la qualité de l'outil employé, nécessitant par conséquent la compétence d'un spécialiste.

Elles nécessitent de toute façon alors la manutention manuelle des outils et des matériaux, la réalisation d'essais préliminaires pour régler les côtes finales, l'adaptation de table de bridage de matériau, la transposition des côtes plans en côtes maquettes, le contrôle visuel permanent de l'opérateur spécialisé etc....

Elles peuvent faciliter certes le travail de découpe, mais aucune ne répond au problème spécifique des maquettistes et en cas de problème en cours de travail (outil cassé, erreurs de côtes dues aux jeux inhérents à tout assemblage de pièces mécaniques en mouvement), il faut recommencer toute la pièce.

Récemment afin de répondre aux divers inconvénients cités ci-dessus, divers matériels ont été développés dans le domaine de la réalisation de maquette tridimentionnelle, mais du fait de la complexité des problèmes à résoudre, chacun correspond à un type de maquettes données : ainsi on relève la demande de brevet allemande DE 3711470A1 déposée le 04/04/87 par FRAUNHOFER Gesellshaft concernant un procédé de réalisation de maquettes de véhicules consitutés d'une multitudes de tranches profilées et fabriquées par enlèvement de matériau sur des plaques, grâce à un rayon laser piloté par ordinateur qui a divisé préalablement la forme du modèle à reproduire en plans parallèles dans lesquels sont définis et situées lesdites tranches profilées.

On peut cité également la demande de brevet européen n° 0290809 déposée le 14/04/88 par "NORTHROP CORPORATION" qui porte essentiellement sur la réalisation de maquettes d'avion, dont on reconstitue la surface de coque externe par assemblage de rédisseurs internes sur lequel on vient appliquer une peau d'habillage et qui sont déterminés par analyse de forme assité par ordinateur qui en définit des tranches 'd'éléments "virtuels".

Ces diverses inventions sont donc très spécifiques de leurs applications et leur procédés d'analyse et de reproduction répond à des besoins et des objectifs propres à chacune de ces applications, et qui sont très différents de ceux que l'on recherche dans le domaine des maquettes de bâtiments, de sites historiques et de tout espace d'urbanisme ou naturel que l'on peut qualifier de projet.

Le problème posé est de pouvoir découper et usiner des éléments de maquettes de manière automatique, à partir de divers panneaux de matériau d'épaisseur différente suivant le besoin et des données descriptives du projet en général fournies en norme internationale de type IGES bâtiment (Initial Graphic Exchange Specification), de telle façon que l'opérateur n'assure qu'une surveillance ponctuelle et que les éléments obtenus soient directement utilisables, repérés et aux côtes exactes voulues.

Une solution au problème posé est un procédé de fabrication de maquettes, dans lequel :
- on introduit dans la mémoire d'un ordinateur toutes les informations codées suivant une norme internationale, correspondant à la description géométrique complète des volumes et des surfaces du bâtiment ou du site, dont on veut réaliser la maquette;
- on programme ledit ordinateur pour qu'il commande une machine à outil à tête de fraisage portant des outils interchangeables pour qu'il décompose les différentes surfaces en éléments de surface élémentaire, compatible avec les dimensions des plaques disponibles, elles-mêmes compatibles avec celles de la table de travail de ladite machine-outil, et avec la nature même desdites surfaces;
- on sélectionne des plaques suivant le matériau le plus adapté à la nature desdits éléments et l'épaisseur voulue ;
- on commande ladite machine-outil de telle façon qu'elle découpe des éléments correspondant, à l'échelle voulue, auxdites surfaces du bâtiment ou du site dans les plaques sélectionnées;
- on repère chacun de ces éléments par rapport à la description géométrique complète et on remet à un opérateur lesdits éléments qu'il peut alors assembler entre eux par tout moyen connu pour réaliser la maquette dudit bâtiment ou site.

Une autre solution au problème posé est un dispositif de découpe automatique d'éléments pour la fabrication de maquettes comportant un ordinateur, disposant de périphériques connus et une machine à outil, disposant d'une tête de fraisage portant des outils interchangeables, montée sur un support au-dessus d'une table de travail recevant les plaques de matériaux à découper, caractérisé en ce que l'un desdits périphériques est un moyen de transfert d'informations permettant d'introduire dans ledit ordinateur la description géométrique complète des volumes et des surfaces du bâtiment ou du site dont on veut réaliser la maquette et codés suivant une norme internationale, ledit ordinateur comportant une carte de contrôle de pilotage suivant au moins trois axes de ladite tête de fraisage équipée d'au moins trois capteurs de déplacement renvoyant les informations au micro-ordinateur qui peut corriger ou modifier alors automatiquement si nécessaire les mouvements de ladite tête, laquelle table de travail est chargée de plaques à découper correspondant à l'épaisseur et à la nature du matériau voulu suivant l'analyse des informations reçues dans l'ordinateur, de telle façon que les éléments de surfaces découpés permettent de réaliser la maquette à l'échelle choisie.

Le résultat est un nouveau procédé de fabrication de maquettes et un nouveau dispositif de découpe automatique d'éléments pour cette fabrication.

Les avantages d'un tel procédé et dispositif sont nombreux. En effet, ils permettent essentiellement une rapidité d'opération dans la réalisation des maquettes, la plupart des plans de projet de bâtiment et des relevés topographiques sont réalisés suivant la norme IGES, ou sinon il existe des programmes de conversion permettant de se connecter à tout système de CAO et DAO d'architecte et il est donc facile et rapide de les utiliser dans le présent procédé qui permet alors d'obtenir automatiquement et dans les meilleurs délais tous les éléments permettant ensuite d'assembler la maquette.

Par ailleurs, la précision de découpe obtenue grâce à l'invention, ni trop grande pour ne pas grever les coûts, ni trop faible pour ne pas avoir à recommencer, assure une qualité et une reproduction très fidèle du projet ou du site d'origine.

La surface de la table de travail peut être importante et permettre de découper des éléments de grande dimension, ce que ne permet aucune machine-outil de mécanique actuelle, car dans celle-ci souvent, au moins un des degrés de translation est assuré par la table de travail elle-même.

L'automatisme peut être totalement intégré au dispositif et évite ainsi, grâce au contrôle des déplacements de la tête de fraisage et au dialogue correspondant entre la machine-outil et l'ordinateur, de maintenir un opérateur permanent qui peut donc se consacrer a préparer les données de la prochaine maquette, ou à assembler la précédente.

En effet, la présente invention assure une réalisation qui peut être industrielle directement, sans besoin d'essais préliminaires.

Il n'y a pas besoin non plus d'analyse préalable de la description initiale, c'est la programmation suivant le procédé qui assure l'échantillonnage des surfaces et des volumes pour en définir des surfaces élémentaires qui seront découpées par la machine-outil et le repérage de celles-ci par rapport à l'ensemble permet un assemblage rapide sans tâtonnement de l'opérateur.

Le coût final des maquettes obtenues par le procédé suivant l'invention est donc raisonnable grâce à la réduction des temps de main d'oeuvre, à l'optimisation des découpes et la rapidité d'exécution. Ceci permet un amortissement assez court de l'ensemble du dispositif et offre un service de fabrication de maquettes qui intéresse de nombreux utilisateurs.

On peut citer par exemple tous les secteurs du BTP (Bâtiment et Travaux Publics) tels que le génie-civil, les relevés topographiques de terrain par courbe de niveau ou d'isobathes, les monuments historiques, les bâtiments en général (construction individuelle, collective, industrielle ou publique), mais aussi l'archéologie, la géographie, les jeux, la reconstitution de scènes historiques (réalisation de diorama en particulier) etc...

Le procédé permet également à l'utilisateur de choisir le niveau de détail à réaliser, en particulier par l'habillage qui ne peut être introduit qu'après la définition des formes extérieures et est alors ici exécuté soit par la machine-outil s'il s'agit d'habillage intégré à un élément de montage, soit par un traceur connecté en périphérique annexe s'il s'agit seulement de graphisme ou de dessin à découper ensuite sur des feuilles de couleur par exemple.

Par ailleurs en remplaçant l'outil de découpe par un moyen de mesure de distance, le dispositif suivant l'invention permet la détermination du relief d'un objet.

La description suivante se réfère aux dessins annexés, sans aucun caractère limitatif, qui décrivent un exemple de réalisation d'un dispositif suivant le procédé de l'invention, figuré à titre d'illustration de celle-ci, mais d'autres réalisations et d'autres applications peuvent être envisagées.

La figure 1 est un schéma organigramme d'un dispositif permettant de réaliser le procédé suivant l'invention.

La figure 2 est une vue perspective de l'ensemble d'une machine-outil suivant un dispositif de l'invention.

La figure 3 est une coupe en long de la machine-outil.

La figure 4 est une coupe transversale de détail des rouleaux de blocage de la plaque à découper.

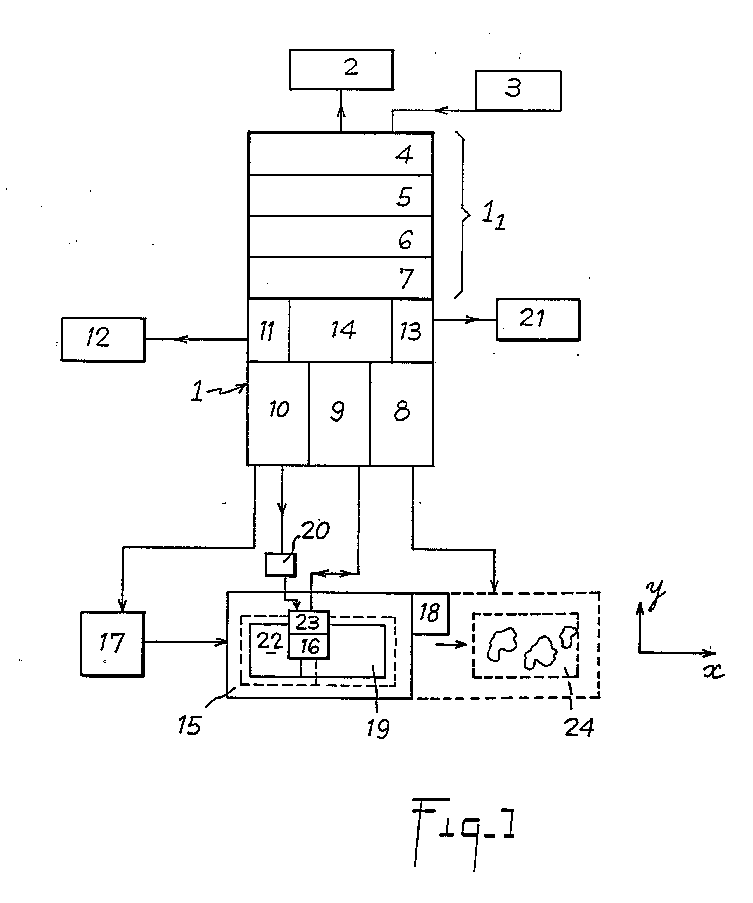

La figure 1 est un schéma organigramme d'un dispositif et d'un programme permettant de réaliser le procédé suivant l'invention. On introduit dans un ordinateur 1 des informations codées suivant une norme internationale telle que préférentiellement la norme IGES (Initial Graphics Exchange Specification - U.S. Department of Commerce - National Bureau of Standard - Document Ref : NBSIR 863359 version 3.0 - SP 686), ou la norme DXF (Data Exchange File), par tout système de transfert d'informations 3 tel que des disquettes, un autre ordinateur ou autre, et correspondant à la description géométrique complète des volumes et des surfaces du bâtiment ou du site, que l'on appellera ici le projet et dont on veut réaliser la maquette.

L'ordinateur peut être couplé à un écran graphique 2 qui permet de contrôler lesdites informations. Celles-ci peuvent être des représentations en deux dimensions (fichier 2D) ou en trois dimensions (fichier 3D), et si elles ne sont pas sous la norme choisie, on les convertit dans cette norme.

L'unité centrale 1 de l'ordinateur est alors programmée pour générer tous les paramètres nécessaires au fonctionnement du dispositif à partir desdites informations et suivant toute méthode et langage de programmation connu par ailleurs, et qui n'est pas l'objet de notre invention..

Tout d'abord, on choisit l'échelle et on décompose 4 les différentes surfaces du projet en éléments de surface élémentaire compatible avec les dimensions des plaques disponibles stockées dans un chargeur 17, elles-même compatibles avec celles de la table de travail 19 de la machine-outil 15, connectée à l'ordinateur 1 et avec la nature même desdites surfaces.

On sélectionne ensuite 5 les plaques et les pièces à usiner suivant le matériau le plus adapté à la nature desdits éléments et l'épaisseur voulue.

On choisit la dimension des plaques et on définit 6 le profil des découpes à effectuer dans chaque plaque pour tous les éléments de même nature et de même épaisseur, en tenant compte des coupes nécessaires desdits profils pour réaliser le raccordement entre deux éléments adjacents, de telle façon que ledit raccordement soit bien ajusté et facile à réaliser, par exemple par un choix adapté en dimension et en nombre de languettes ou par des coupes en biseaux.

On choisit ensuite 7 et on associe l'outil de découpe et sa vitesse de rotation à chaque coupe ainsi définie ci-dessus.

Une fois, ou au fur et à mesure que les opérations d'analyse ci-dessus et les choix correspondant sont réalisés, on commande alors par une carte de contrôle 14 les différents mouvements de la machine-outils 15 associée.

On commande 10 de charger et d'immobiliser tout d'abord sur la table de travail 19 chaque plaque sélectionnée ayant une largeur égale à celle de ladite table et on la maintient fermement au-dessous et au voisinage de la verticale de l'outil monté sur la tête de fraisage 16, tel que décrit dans les figures suivantes par tout moyen 20.

On déplace alors ladite tête de fraisage 16 suivant au moins les trois directions x, y et z (soit longitudinale, transversale et verticale respectivement), grâce par exemple à trois moteurs 23 de façon à effectuer la découpe de chaque élément suivant les côtes calculées et on vérifie à chaque instant grâce à des capteurs de déplacement suivant les trois dites directions que l'outil découpe ladite plaque 22 en respectant exactement lesdites côtes et par comparaison 14, on rattrape automatiquement par un repositionnement 9 de la tête 16 tout décalage éventuel entre la côte initiale voulue et la côte mesurée.

Après chaque découpe suivant une coupe de profil donnée, on change l'outil automatiquement par tout moyen connu depuis un ratelier 18 de stockage d'outils associé à la table 19 pour procéder à la découpe suivante s'il s'agit d'une autre coupe de profil; et quand tous les éléments de même nature et de même épaisseur ont été découpés dans ladite plaque, on commande 8 le dégagement de celle-ci, on récupère les éléments découpés 24 pour réaliser la maquette et on la remplace par la plaque suivante.

En option, on peut programmer 13 et connecter audit ordinateur un périphérique, qui est une imprimante connue 21, sur laquelle sont adressées et imprimées les références des éléments découpés par la machine-outil 15 par rapport à la description géométrique complète d'origine des volumes et des surfaces du bâtiment ou du site dont on réalise la maquette. Ces plans de montage ainsi tracés aident le maquettiste dans l'assemblage de celles-ci.

De plus, on peut également piloter 11 après définition et analyse sur les plans d'origine des surfaces du projet, un traceur d'habillage 12 pour décorer et compléter les éléments de construction de ladite maquette.

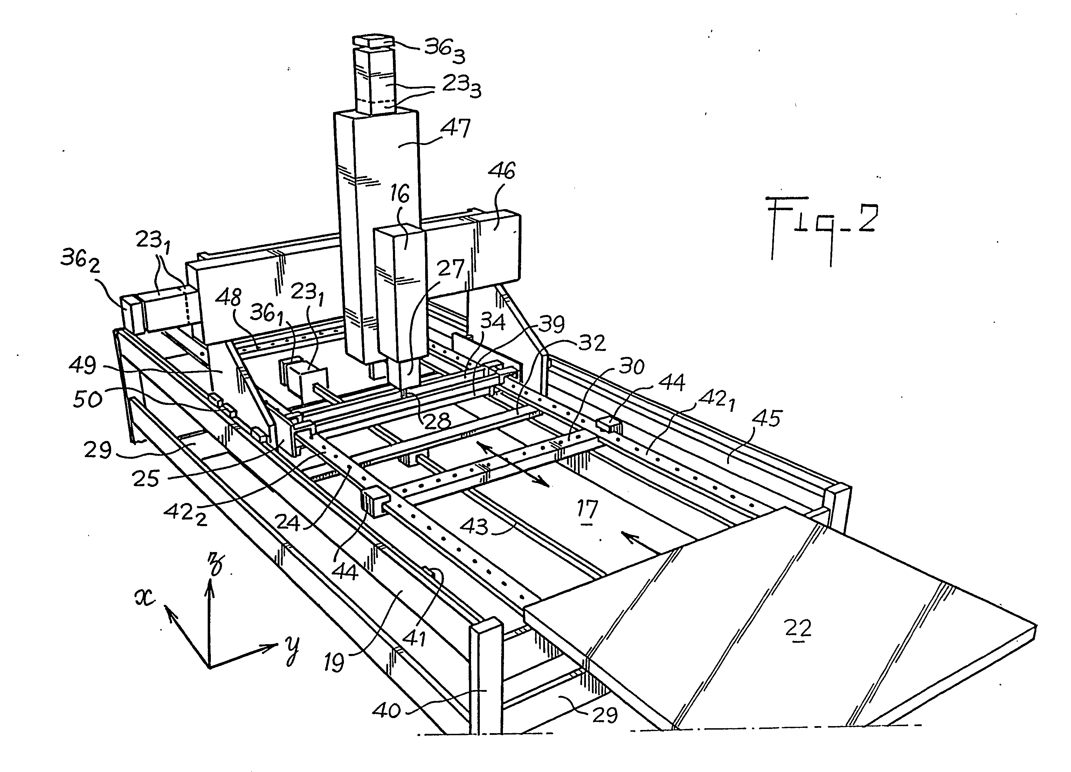

La figure 2 est une vue perspective de l'ensemble de la partie machine-outil 1 suivant un dispositif de l'invention et tel que présenté dans la figure 1.

La table de travail 19 est montée sur tout support 40 comportant des pieds et des traverses d'appui. Elle est chargée automatiquement 17 de plaques 22 à découper suivant des commandes adressées par ledit ordinateur comme décrit dans la figure 1 et comporte un cadre 42 placé sous ladite plaque 22 de même largeur, de longueur réglable jusqu'à être égale à celles de celle-ci et muni de trous d'aspiration 24 au travers desquels est maintenue une dépression d'air qui maintient ladite plaque immobilisée par rapport audit cadre sur une partie de sa périphérie.

Le cadre est constitué par exemple de deux traverses longitudinales fixes $42_1$, $42_2$ percées ou non desdits trous et faisant toute la longueur de la table de travail 19. Il comporte une traverse percée de trous 24 fixe 48 et aspirante, suivant la largeur de la table et une autre traverse 30 mobile percée de trous également et aspirante, qu'on ajuste ainsi à la longueur de la plaque 22 et qui inclut des guides 44 pour centrer celle-ci.

La table de travail comporte également longitudinalement sur l'axe x des guides 45 pour des roulements 50 supportant un portique 49 monté à cheval sur la table de travail, de façon à enjamber la plaque 22 immobilisé sur le cadre 42.

Ce portique reçoit sur chacune de ses jambes des porte-rouleaux 25 placés au niveau de ladite plaque 22 et sur lequel sont fixés transversalement et parallèlement donc à un côté de la table de travail 19, deux paires de rouleaux, de part et d'autre de l'épaisseur de la plaque sur toute sa largeur. Les uns sont appelés bas 39 et les autres haut 34 et sont placés de chaque côté de la tête de fraisage 16, de telle sorte que celle-ci peut se déplacer verticalement entre ces deux paires, et qu'une fois les deux rouleaux d'une même paire serrés sur la plaque, celle-ci est bloquée en vibration durant la découpe; lequel ensemble de rouleaux se déplace longitudinalement suivant la direction x en même temps que la tête de fraisage 16 grâce au portique 49.

Sur sa traverse supérieure, le portique reçoit un ensemble 46 de translation latérale suivant la direction y, mû par un moteur $23_2$ et couplé à un capteur de déplacement correspondant, lequel ensemble 46 porte lui-même un ensemble 47 de translation verticale suivant la direction z, mû par un moteur $23_3$ et couplé à un capteur de déplacement correspondant.

Cet ensemble 47 supporte la tête de fraisage 16 proprement dite avec son moteur d'entraînement, son porte-outils 27 et l'outil correspondant à la découpe choisie 28.

Le déplacement longitudinal du portique 49 suivant la direction x et sur ses roulements 50 est assuré par exemple par un moteur $23_1$ faisant tourner une vis à bille sans fin 43, fixée entre deux traverses fixes 29 de la table de travail 19. En tournant, cette vis entraîne alors une barre mobile 32 reliée audit portique.

Les guides 45 de roulement de celui-ci comportent par sécurité au moins une fin de course 41 à chaque extrémité de la table.

Chaque moteur d'entraînement 23 dispose également d'un bouton de manoeuvre 36 pour un réglage manuel éventuel en début ou en cours d'opération.

Le sens de chargement de la plaque 22 sur la table de travail peut être inversé et ladite plaque peut être amenée du côté de la barre d'aspiration fixe 48.

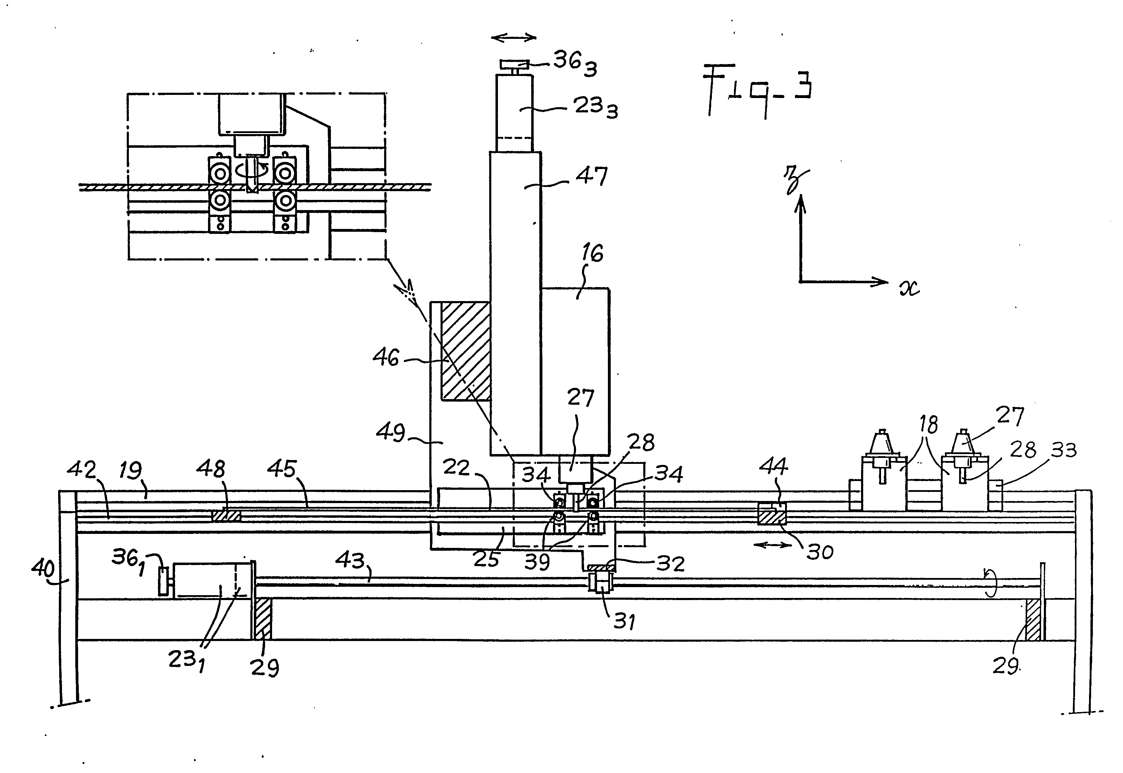

La figure 3 est une coupe en long de la machine à outil sur laquelle on retrouve certains éléments déjà décrits dans la figure 2, à savoir : le support 40 de la table de travail 19; les guides de roulement 45 sur lesquels s'appuient les jambes du portique 49 et le système d'entraînement de celui-ci sur l'axe x longitudinal de la table. Pour cela, à titre d'exemple de réalisation et comme décrit dans la figure 1, un moteur $23_1$ muni de son bouton de manoeuvre $36_1$ entraîne une vis à bille sans fin 43 supportée par deux traverses fixes 29 et entraîne alors longitudinalement sur un axe x une douille 31 à bille solidaire d'une barre mobile 32 reliée au portique.

On retrouve également le cadre 42 supportant la plaque à découper 22 et comportant deux traverses aspirantes, l'une fixe 48 et l'autre mobile 30 avec ses guides 44 de la plaque 22. Celle-ci, outre son immobilisation générale, grâce à ce cadre aspirant périphérique, est saisi de chaque côté de la tête de fraisage 16 et plus précisément de l'outil 28 par deux paires de rouleaux 34 et 39 supportés par un porte-rouleaux 25 se déplaçant avec le portique 49. Ceci empêche toute vibration et permet l'usinage de la plaque sans risque d'arrachement et avec une bonne précision.

Le mouvement de translation de la tête de fraisage 16 est assuré par l'ensemble 46, lui-même supportant comme déjà décrit dans la figure 1, l'ensemble de translation vertical 47 avec son moteur $23_3$ et son bouton de réglage et de manoeuvre $36_3$.

La tête de fraisage 16 comporte un moyen de verrouillage et de déverrouillage automatique du porte-outil 27 et de son outil 28, lequel moyen est commandé par ledit ordinateur 1 et permet de changer ledit outil 28 de découpe; pour cela, la table de travail 19 de la machine-outil 15 comporte un ratelier 18 d'outils 28, disponibles avec leur porte-outil 27, adaptable à la tête de fraisage et accessible par celle-ci.

Ce ratelier peut être mis à une extrémité de ladite table et sur un support 33 permettant, d'une part, le passage des plaques en-dessous et, d'autre part, le déplacement du portique au-dessus.

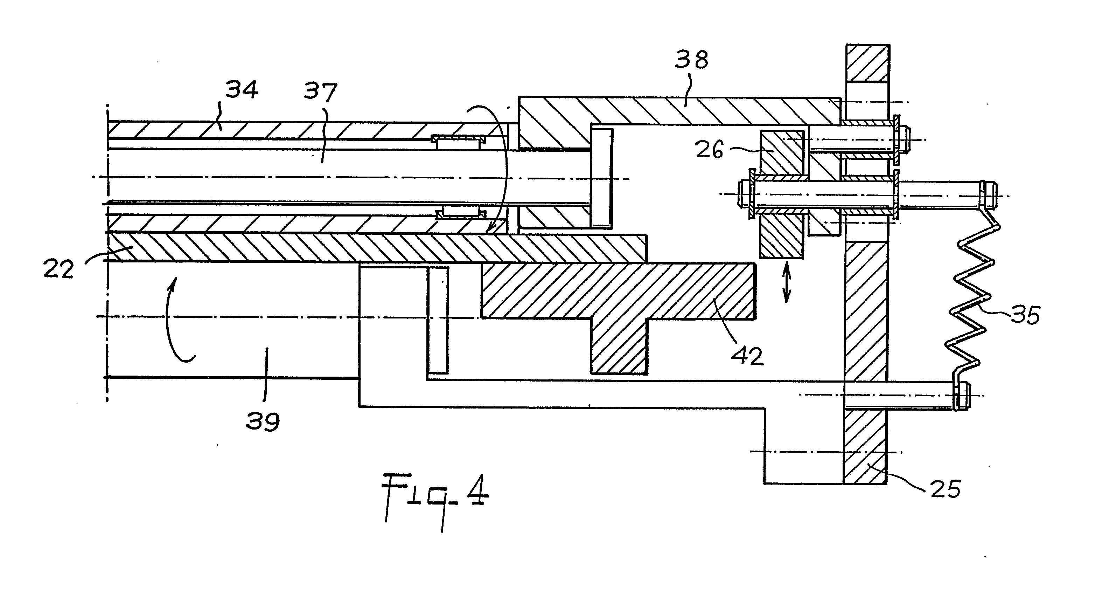

La figure 4 est une coupe transversale de détail des rouleaux de blocage de la plaque à découper 22. On ne distingue ici qu'une paire de ces rouleaux constituée d'un rouleau haut 34 et un rouleau bas 39. Ce dernier est solidaire du support porte-rouleau 25, relié au portique. Sa hauteur est donc constante et sa génératrice supérieure au même niveau que le cadre 42 sur lequel s'appuie aussi la plaque 22. Le rouleau supérieur 34 est monté sur son axe 37 solidaire d'un support 38 mobile verticalement et maintenu pressé vers le bas, contre la plaque grâce à des ressorts 35. Ainsi, les deux rouleaux 34 et 39 serrent ladite plaque, quelle que soit son épaisseur, la maintiennent à un niveau constant au-dessus de la tête de l'outil pendant la découpe, résistent aux efforts de coupe et l'empêchent de vibrer.

Quand on veut dégager les rouleaux du haut, et sortir la plaque découpée, on amène par exemple le portique à une extrémité de la table où des rampes auront été fixées sur celle-ci pour venir prendre appui sur les galets 26, qui sont alors repoussés vers le haut. Ces rampes peuvent être au niveau de la barre aspirante fixe 48.

La présente invention n'est pas limitée aux modes de réalisations décrits ci-dessus et qui ne constituent qu'un exemple de fabrication auquel des modifications et des variantes peuvent être apportées. En particulier, on peut remplacer la tête de fraisage et les outils correspondant par une tête de découpe au laser ou à l'eau sous pression par exemple. De même, on peut monter ladite tête sur un support permettant son orientation suivant au moins un axe de rotation pour incliner l'outil.

Dans une application particulière du dispositif suivant l'invention, l'on remplace ladite tête de fraisage 16 et les outils de découpe par un émetteur-récepteur par exemple de type optique, l'on place ledit objet à l'emplacement desdites plaques 22 à découper après avoir enlevé si nécessaire les systèmes de chargement et de maintien de celle-ci, on programme ledit ordinateur 1 pour qu'il commande le déplacement de ladite tête 16 afin d'effectuer un maillage connu en x et en y dans le plan horizontal dudit objet et qui positionne à tout moment ledit émetteur-récepteur à la distance voulue de la surface dudit objet, permettant la mesure de la côte verticale z , on relève les autres coordonnées de chaque point de l'objet mesuré alors par lesdits capteurs associés aux moteurs de déplacement, et on transforme l'ensemble de ces coordonnées pour les enregistrer dans la mémoire dudit ordinateur sous forme d'informations codées suivant une norme internationale, correspondant à la description géométrique complète des volumes et des surfaces dudit objet. On peut alors réaliser une maquette suivant le procédé décrit précédemment et utilisant éventuellement le même dispositif que ci-dessus en réinstallant les outils de découpe et la table de travail dans la configuration des figures présentées ci-avant. Cette application permet la mesure et l'enregistrement du relief d'un objet, tel que par exemple une maquette déjà existante, dont on veut faire des copies identiques ou à une autre échelle : le même dispositif peut servir alors à la mesure, puis à la fabrication de ces maquettes copies.

Les émetteurs-récepteurs peuvent être en particulier :
- soit un laser, dans ce cas on supprime l'ensemble de translation d'axe Z ainsi que le moteur de fraiseuse que l'on remplace par un laser. Le déplacement du portique étant assuré par deux moteurs pas à pas, il suffit de traduire en unité de longueur grâce aux capteurs associés, le nombre de pas moteur de chaque déplacement pour connaître exactement la position de l'axe du laser par rapport à l'origine machine, ou par translation par rapport à l'origine pièce. La côte Z de chaque point étant dans ce cas déterminée en continu par le laser;
- soit une cellule photo-électrique, dans ce cas, il suffit de remplacer le moteur de fraiseuse par une cellule photo-électrique ayant un seuil de détection très précis et pratiquement insensible aux variations de couleurs. De la même manière que précédemment, la position selon les directions X et Y du point à mesurer est déterminé grâce aux moteurs pas à pas et a leurs capteurs associés. Pour la mesure de la côté Z, il suffit de descendre la cellule jusqu'à son déclenchement. Connaissant le seuil de détection "s", il est alors facile de traduire le nombre de pas moteur en un déplacement pour déterminer l'altitude du point par rapport à une surface de référence. Dans ce cas, les mesures se feront point à point;
- soit une touche tactile. Le principe de mesure reste le même que précédemment, la descente de la touche tactile se faisant jusqu'au contact de la pièce à mesurer.

Dans tous les cas, les déplacements pourront être commandés manuellement à l'aide d'une boîte à boutons ou automatiquement à l'aide du micro-ordinateur qui se charge par l'intermédiaire d'un interface, de commander les déplacements et d'enregistrer les mesures.

**Revendications**

1. Procédé de fabrication de maquettes utilisant un ordinateur (1) dans la mémoire duquel on introduit toutes les informations codées suivant une norme internationale, correspondant à la description géométrique complète des volumes et des surfaces du bâtiment ou du site, dont on veut réaliser la maquette, caractérisé en ce que :
- on programme ledit ordinateur (1) pour qu'il commande une machine à outil (15) à tête de fraisage (16) portant des outils (28) interchangeables, et pour qu'il décompose (4) les différentes surfaces du bâtiment ou du site en éléments de surface élémentaire, compatible avec les dimensions des plaques disponibles, elles-mêmes compatibles avec celles de la table de travail de ladite machine-outil, et avec la nature même desdites surfaces;
- on sélectionne (5) des plaques (22) suivant le matériau le plus adapté à la nature desdits éléments et l'épaisseur voulue;
- on programme ledit ordinateur pour qu'il commande une machine à outil (15) à tête de fraisage (16) portant des outils (28) interchangeables ;
- on commande ladite machine-outil de telle façon qu'elle découpe des éléments correspondant, à l'échelle voulue, auxdites surfaces du bâtiment ou du site dans des plaques (22) sélectionnées ;
- on repère chacun de ces éléments par rapport à la description géométrique complète et on remet à un opérateur lesdits éléments qu'il peut alors assembler entre eux par tout moyen connu pour réaliser la maquette dudit bâtiment ou site.

2. Procédé de fabrication de maquettes suivant la revendication 1, caractérisé en ce que :
- on définit (6) le profil des découpes à effectuer dans chaque plaque pour tous les éléments de même nature et de même épaisseur, en tenant compte des coupes nécessaires desdits profils pour réaliser le raccordement entre deux éléments adjacents, de telle façon que ledit accordement soit bien ajusté et facile à réaliser;
- on choisit (7) et on associe l'outil de découpe (28) et sa vitesse de rotation correspondant à chaque coupe ainsi définie ci-dessus;
- on charge et on immobilise chaque plaque sélectionnée (22) sur la table de travail (19) au-dessous de la tête de fraisage (16), sur laquelle on fixe automatiquement l'outil correspondant à la coupe du profil de découpe défini préalablement, et on maintient fermement ladite plaque au voisinage de la verticale de l'outil (28);
- on déplace ladite tête de fraisage (16) suivant au moins les trois directions (x, y et z), de façon à effectuer la découpe de chaque élément suivant les côtes calculées et on vérifie à chaque instant grâce à des capteurs de déplacement suivant lesdites directions que l'outil découpe ladite plaque en respectant exactement lesdites côtes, et on rattrape automatiquement tout décalage éventuel entre celles-ci et les côtes mesurées;
- après chaque découpe suivant une coupe de profil donné, on change l'outil automatiquement par tout moyen connu pour procéder à la découpe suivante, s'il s'agit d'une autre coupe de profil, et quand tous les éléments de même nature et de même épaisseur ont été découpés dans une plaque (22), on dégage celle-ci automatiquement et on la remplace par la suivante.

3. Procédé de fabrication de maquettes suivant l'une quelconque des revendications 1 et 2, caractérisé en ce qu'on immobilise chaque plaque (22) sur la table de travail (19) en créant une dépression par aspiration d'air au travers d'un cadre réglable (42) aux dimensions de ladite plaque et placé sous celle-ci.

4. Procédé de fabrication de maquettes suivant l'une quelconque des revendications 1, 2 et 3, caractérisé en ce que, pour maintenir fermement ladite plaque (22) au voisinage de la verticale de l'outil (28), on place deux paires de rouleaux (34 et 39), de part et d'autre de l'épaisseur de la plaque sur toute sa longueur et de chaque côté de l'outil monté sur la tête de fraisage (16), qui peut alors se déplacer verticalement entre ces deux paires, on serre ladite plaque entre les rouleaux d'une même paire et on déplace longitudinalement l'ensemble de ces rouleaux en même temps que la tête de fraisage.

5. Dispositif de découpe automatique d'éléments pour la fabrication de maquettes comportant un ordinateur (1), disposant de périphériques connus et une machine à outil (15), disposant d'une tête de fraisage (16) portant des outils (28) interchangeables, montée sur un support (49) au-dessus d'une table de travail (19) recevant les plaques (22) de matériaux à découper, caractérisé en ce que l'un desdits périphériques est un moyen de transfert (3) d'informations permettant d'introduire dans ledit ordinateur (1) la description géométrique complète des volumes et des surfaces du bâtiment ou du site dont on veut réaliser la maquette et codés suivant une norme internationale, ledit ordinateur comportant une carte (14) de contrôle de pilotage suivant au moins trois axes (x, y, z) de ladite tête de fraisage (16) équipée d'au moins trois capteurs de déplacement renvoyant les informations au micro-ordinateur (1) qui peut corriger ou modifier alors automatiquement si nécessaire les mouvements de ladite tête, laquelle table de travail (19) est chargée de plaques à découper correspondant à l'épaisseur et à la nature du matériau voulu suivant l'analyse des informations reçues dans l'ordinateur (1), de telle façon que les éléments de surfaces découpés permettent de réaliser la maquette à l'échelle choisie.

6. Dispositif de découpe automatique d'éléments pour la fabrication de maquettes suivant la revendication 5, caractérisé en ce que ladite machine-outil comporte un ratelier (18) de plusieurs outils (28), accessible à la tête de fraisage (16), qui comporte un moyen de verrouillage et de déverrouillage automatique commandé par ledit ordinateur (1) et permettant de changer son outil (28) de découpe.

7. Dispositif de découpe automatique d'éléments pour la fabrication de maquettes suivant l'une quelconque des revendications 5 et 6, caractérisé en ce que la table de travail de ladite machine-outils est chargée automatiquement (17) de plaques à découper (22) suivant des commandes adressées par ledit ordinateur, laquelle table de travail comporte un cadre (42) de dimension extérieure réglable jusqu'à être égale à celle desdites plaques, et muni de trous (24) d'aspiration au travers desquels est maintenue une dépression d'air qui maintient ladite plaque (22) immobilisée par rapport audit cadre sur une partie de sa périphérie.

8. Dispositif de découpe automatique d'éléments pour la fabrication de maquettes suivant l'une quelconque des revendications 5 à 7, caractérisé en ce que la machine-outils (15) comporte, parallèlement à un côté de la table de travail (19), deux paires de rouleaux (34 et 39), de part et d'autre de l'épaisseur de la plaque (22) sur toute sa largeur, et de chaque côté de la tête de fraisage (16), de telle façon que celle-ci peut se déplacer verticalement entre ces deux paires et qu'une fois les deux rouleaux d'une même paire serrés sur la plaque (22), celle-ci est bloquée durant la découpe, lequel ensemble de ces rouleaux peut se déplacer longitudinalement et automatiquement en même temps que la tête de fraisage (16).

9. Dispositif de découpe automatique d'éléments pour la fabrication de maquettes suivant l'une quelconque des revendications 5 à 8, caractérisé en ce que l'un des périphériques de l'ordinateur (1) est une imprimante (21) connue sur laquelle sont adressées et imprimées les références des éléments découpés par la machine-outils (15), par rapport à la description géométrique et complète d'origine des volumes et des surfaces du bâtiment ou du site dont on réalise la marquette.

10. Dispositif de découpe automatique d'éléments pour la fabrication de maquettes suivant l'une quelconque des revendications 5 à 9, caractérisé en ce que l'un des périphériques de l'ordinateur (1) est un traceur d'habillage pour décorer et compléter les éléments de construction de ladite maquette, piloté (11) après définition et analyse des plans d'origine du projet.

11. Application d'un dispositif de découpe automatique d'éléments pour la fabrication de maquettes suivant la revendication 5, pour la mesure et l'enregistrement du relief de l'objet, caractérisée en ce que l'on remplace ladite tête de fraisage (16) et les outils de découpe par un émetteur-récepteur par exemple de type optique, l'on place ledit objet à l'emplacement desdites plaques (22) à découper après avoir enlevé si nécessaire les systèmes de chargement et de maintien de celle-ci, on programme ledit ordinateur (1) pour qu'il commande le déplacement de ladite tête (16) afin d'effectuer un maillage connu en x et en y dans le plan horizontal dudit objet et qui positionne à tout moment ledit émetteur-récepteur à la distance voulue dudit objet, permettant la mesure de la côte verticale (z), on relève les autres coordonnées de chaque point de l'objet mesuré alors par lesdits capteurs associés aux moteurs de déplacement, et on transforme l'ensemble de ces coordonnées pour les enregistrer dans la mémoire dudit ordinateur sous forme d'informations codées suivant une norme internationale, correspondant à la description géométrique complète des volumes et des surfaces dudit objet, dont on peut alors réaliser une maquette suivant le procédé de l'une quelconque des revendications 1 à 4.

Fig-1

$36_3$

$23_3$

47

46

16

$36_2$

$23_1$

27

48

$23_1$

$36_1$

34

39

32

49

30

44

$42_1$

45

50

29

28

25

$42_2$

24

17

44

43

22

41

19

40

29

$x$ $z$ $y$

Fig-2

EP 0 369 909 A1

Fig-3

Fig. 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X,D | DE-A-3 711 470 (FRAUNHOFER GESELLSCHAFT) * colonne 2, ligne 1 - colonne 4, ligne 47; figures 1,2 * --- | 1,2,9, 10 | G 05 B 19/41 B 23 D 59/00 B 44 B 1/00 |
| X,P D | EP-A-0 290 809 (NORTHROP CORP.) * résumé; figures 3-5,12a-12f,15,16,18 * --- | 1,2,5,9 -11 | |
| Y | TECHNISCHE RUNDSCHAU vol. 80, no. 34, 19 août 1988, pages 24-31; U. GRUPE et al.: "Mehr Kompetenzen in der Werkstatt durch CAD/CAM" * page 28 "Schnittstelle nach DIN 66025" - page 30 "Genormte Grafikaustauschstandards (IGES) als Schnittstelle"; figure 3 * --- | 1,5 | |
| Y | WERKSTATTSTECHNIK vol. 77, no. 3, mars 1987, pages 129-133; W. WALTER et al.: "Universeller CAD/NC-Kopplungsbaustein für NC-Programmiersystem" * tout le document * --- | 1,5 | DOMAINES TECHNIQUES RECHERCHES (Int. Cl.5) B 23 D B 44 B |
| A | US-A-4 649 497 (A.J. CARLSON et al.) * résumé; figure 1 * --- | 1,2,5 | B 26 F B 26 D G 09 B |
| A | METALWORKING PRODUCTION vol. 129, no. 2, fevrier 1985, page 67; NEWING HALL LTD.: "PNC Programming Aid" * tout le document * --- | 1,2,5,9 -11 | G 05 B B 23 Q |
| A | GB-A-2 075 407 (GERBER GARMENT TECHNOLOGY, INC.) * résumé; page 2, ligne 102 - page 3, ligne 43; figure 1 * --- -/- | 1-5,7,8 | |

Le présent rapport a été établi pour toutes les revendications

| Lieu de la recherche | Date d'achèvement de la recherche | Examinateur |
|---|---|---|
| BERLIN | 05-02-1990 | CUNY J M J C |

EPO FORM 1503 03.82 (P0402)

Office européen
des brevets

# RAPPORT DE RECHERCHE EUROPEENNE

Numero de la demande

EP  89 43 0030

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | GB-A-2 188 170  (GERBER GARMENT TECHNOLOGY, INC.)<br>* résumé; figure 1 *<br>--- | 1,2,5,11 | |
| A | EP-A-0 088 645  (RENISHAW ELECTRICAL LTD.)<br>* page 2, ligne 16 - page 5, ligne 3; figure 1 *<br>--- | 1,2,6 | |
| A | FR-A-1 389 246  (LICENTIA PATENT-VERWALTUNGS-GMBH)<br>* tout le document *<br>--- | 1,2,6 | |
| A | FR-A-2 299 059  (GEBR. FALLER GMBH)<br>----- | | |
| | | | **DOMAINES TECHNIQUES RECHERCHES (Int. Cl.5)** |

Le présent rapport a été établi pour toutes les revendications

| Lieu de la recherche | Date d'achèvement de la recherche | Examinateur |
|---|---|---|
| BERLIN | 05-02-1990 | CUNY J M J C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
....................................................................
& : membre de la même famille, document correspondant

EPO FORM 1503 03.82 (P0402)